# EUROPÄISCHE PATENTSCHRIFT

(11) **EP 2 954 007 B1**
(45) Veröffentlichungstag und Bekanntmachung des Hinweises auf die Patenterteilung: **07.12.2016**
(21) Anmeldenummer: 13704083.8
(22) Anmeldetag: 11.02.2013
(51) Int. Cl.: C08J 3/00, C08L 51/00, C08F 265/04

(54) **WEICHMACHERFREIE ARTIKEL AUS PFROPFCOPOLYMEREN DES PVC'S**
PLASTICIZER-FREE ARTICLE MADE OF PVC GRAFT COPOLYMERS
ARTICLE NON PLASTIFIÉ À BASE DE COPOLYMÈRES GREFFÉS DE PVC

(43) Veröffentlichungstag der Anmeldung: 16.12.2015
(73) Patentinhaber: VESTOLIT GmbH & Co. KG, 45772 Marl (DE)
(72) Erfinder: BRIZZOLARA, Davide, 45701 Herten (DE); FISCHER, Ingo, 45772 Marl (DE); GEHRKE, Jan-Stephan, 45721 Haltern am See (DE); POLTE, Dieter, 46514 Schermbeck (DE); STIENEKER, Axel, 48143 Münster (DE); STURM, Harald, 46286 Dorsten (DE)
(74) Vertreter: Godemeyer Blum Lenze Patentanwälte Partnerschaft mbB - werkpatent
(86) Internationale Anmeldenummer: PCT/EP2013/052657
(87) Internationale Veröffentlichungsnummer: WO 2014/121852

(56) Entgegenhaltungen:
- EP-A1- 0 590 659
- DE-A1- 4 338 374

## Beschreibung

Die Erfindung betrifft Mischungen von Vinylchlorid-Pfropfcopolymeren sowie das Herstellungsverfahren solcher Vinylchlorid-Pfropfcopolymere und deren Mischungen. Die Erfindung betrifft außerdem Formkörper hergestellt unter Verwendung der erfindungsgemäßen Mischungen.

Weichgemachtes Polyvinylchlorid (PVC) gehört nicht zur Gruppe der thermoplastischen Elastomere (TPE), obwohl es über TPE-Eigenschaften verfügt (PVC-Handbook, Charles E. Wilkes, James W. Summers, Charles Anthony Daniels - 2005, Seite 14). Aufgrund der günstigen Rohstoffkosten, der vielfältigen Verarbeitungs- und guten Produkteigenschaften nimmt es eine Sonderstellung unter den thermoplastischen Elastomeren ein. Weich-PVC hat aufgrund der Bildung von Mikrokristalliten und Dipolwechselwirkungen zwischen Chlor- und Wasserstoffatomen eine sehr gute Dehnbarkeit und Reißfestigkeit. Über den Weichmacheranteil im PVC kann sehr einfach die Härte und Flexibilität eines Produkts eingestellt werden. Das hat für den Verarbeiter große logistische Vorteile, weil er aus wenigen Einsatzstoffen eine Vielzahl an Produkten herstellen kann. Einzig die Migrationsfähigkeit des niedermolekularen Weichmachers ist als Nachteil zu betrachten. Durch die Migration des Weichmachers versprödet das Material, was zu einer Verschlechterung der mechanischen Eigenschaften führt.

Seit vielen Jahren werden verschiedene oligomere und polymere Weichmacher verwendet, die aufgrund des hohen Molekulargewichts eine geringe bis keine Tendenz zur Migration aufweisen (Domininghaus - Kunststoffe, 7., neu bearbeitete und erw. Auflage 2008). Bekannte Beispiele sind Copolymere bestehend aus Ethylen-Vinylacetat-Vinylchlorid (EVA-VC), Ethylen-Vinylacetat (EVA, Levapren^{®}), AcrylnitrilButadien (NBR), Styrol-Butadien (SBR), Ethylen-Vinylacetat-Kohlenmonoxid (Elvaloy^{®}), Styrol-Butadien-Styrol (SBS, Kraton^{®}) etc. Die hochmolekularen Weichmacher werden mit dem PVC gemischt oder in einer Suspensionspolymerisation mit PVC gepfropft. Diese Produkte werden nur bei Spezialanforderungen (Kälteflexibilität, geringe Migration, Fettbeständigkeit, etc.) verwendet, weil sonst die Nachteile überwiegen, wie bspw. geringere Weichmachung, komplexere Verarbeitung, schlechtere Weiterreißfestigkeit, etc. Als besonders großer Nachteil ist anzusehen, dass Formkörper opak sind, die aus einer Mischung von PVC und den meisten polymeren Weichmachern (Elastomere) hergestellt wurden.

Die im Stand der Technik beschriebenen PBA-g-PVC-Pfropfcopolymere, die in E-mulsions- oder Suspensionsfahrweise hergestellt werden, sind nur zu transluzenten oder opaken Formkörpern verarbeitbar.

Vernetzte Polyacrylsäureester (PAE) können zur Verbesserung der Kerbschlagzähigkeit von Hart-PVC eingesetzt werden (EP 0472852). In der DE 3803036 wird ein Suspensionsverfahren beschrieben, durch das ein PVC mit einem Anteil von 65 Gew.-% eines vernetzten PAE erhalten werden kann. Das Produkt kann als Schlagzähmodifier oder als polymerer Weichmacher für PVC eingesetzt werden.

In der EP 0647663 wird ein Verfahren zur Herstellung von thermoplastisch elastomeren Pfropfcopolymerisaten des PVC's mit vernetzten Polyacrylaten als Pfropfgrundlage beschrieben. Es werden keine Angaben zur Transparenz oder der Teilchengröße der Pfropfcopolymerisate gemacht.

In der DE 10121580 wird ein Herstellungsverfahren für ein PVC mit bis zu 80 Gew.-% an Elastomer beschrieben. Bei dem Elastomer handelt es sich um einen venetzten Polyacrylsäurebutylester, welcher in einer Emulsionspolymerisation durch Vinylchlorid gepfropft wird. In einer bevorzugten Ausführungsform wird zunächst ein vernetzter Polybutylacrylatlatex mit einem Teilchendurchmesser von 205 nm hergestellt. Der vernetzte Polybutylacrylatlatex wird in einem zweiten Schritt vorgelegt und mit Vinylchlorid gepfropft. Der Kern-Schale-Latex wird gefällt und getrocknet. Aufgrund der Fällung, bei einem Restgehalt an Vinylchlorid zwischen 5 und 10 Gew.-%, bietet der so hergestellte Modifier den Vorteil, dass bei der Verarbeitung von Suspensions-PVC (S-PVC), mit einem Anteil von ca. 10 Gew.-% des erfindungsgemäßen Modifiers, eine besonders schnell plastifizierende Masse entsteht. Dieser Vorteil ist nur für die Extrusion von Hart-PVC mit hohen Durchsatzraten relevant, wenn nur kleine Mengen des Pfropfcopolymeren verwendet werden, um die Kerbschlagzähigkeit zu verbessern.

Im Stand der Technik wird als einzig uns bekannte Methode zur Herstellung von transparenten Polyacrylsäureester modifizierten PVC-Artikeln mittels Verfahren wie Extrudieren, Spritzgießen, Kalandrieren die Verwendung von Pfropfcopolymeren beschrieben, die einen bestimmten Anteil Polystyrol in der Polyacrylatphase enthalten. Der Polystyrolanteil gleicht aufgrund seines höheren Brechnungsindex (n_{D}²⁰ = 1,60) den Unterschied der Brechungsindizes von Polybutylacrylat und PVC aus (Domininghaus - Kunststoffe, 7., neu bearbeitete und erw. Auflage 2008, Kapitel 2.1.2.2.1 Erhöhung der Schlagzähigkeit - Polyacrylate als Modifiziermittel für transparente PVC-Artikel, Seite 372). Aufgrund der hohen Glasübergangstemperatur von Polystyrol ist das Prinzip nur für Hart-PVC geeignet, weil der Polystyrolanteil die weichmachende Wirkung von Polyacrylaten aufhebt. Außerdem wird durch den Polystyrolanteil die UV- und Witterungsstabilität der PVC-Artikel verschlechtert.

Der Erfindung lag daher die Aufgabe zu Grunde, Materialien ohne Zusatz externer Weichmacher in unterschiedlichen Härtegraden (Shore A 70 bis Shore D 80) auf Basis von Vinylchlorid bereifzustellen, die zu (gegebenenfalls auch transparenten) Folien und Formteilen mit thermoplastisch, elastomeren Eigenschaften verarbeitet werden können.

Gegenstand der vorliegenden Erfindung sind Mischungen enthaltend mindestens zwei verschiedene durch Emulsionspolymerisation hergestellte Vinylchlorid-Pfropfcopolymere, wobei die mindestens zwei verschiedenen Pfropfcopolymere jeweils eine Pfropfgrundlage und eine aufgepfropfte zumindest teilweise aus Vinylchlorid bestehende Copolymerphase enthalten, dadurch gekennzeichnet, dass sich die Pfropfcopolymere durch ihre prozentuale Gewichtsverteilung an Pfropfgrundlage und aufgepfropfter Copolymerphase unterscheiden, und wobei bei jedem der Pfropfcopolymere die Glasübergangstemperatur Tg der Pfropfgrundlage niedriger ist als die Glasübergangstemperatur Tg der aufgepfropften Copolymerphase.

Ein Vorteil der erfindungsgemäßen Pfropfcopolymere besteht darin, dass Mischungen von Pfropfcopolymeren, die unterschiedliche Anteile der weichen Pfropfgrundlage enthalten, zu Folien und Formkörpern mit unterschiedlicher Härte verarbeitet werden können. Dadurch kann aus zwei Pfropfcopolymeren mit unterschiedlichen Anteilen PBA sehr einfach durch Variation des Mischungsverhältnisses die Härte Formkörper in einem weiten Bereich eingestellt werden. Ein überraschender Vorteil der erfindungsgemäßen Mischungen ist, dass sich damit auch transparente Folien und Formkörper mit unterschiedlicher Härte herstellen lassen. Dieser Vorteil ist bedeutend, weil Pressplatten, die aus einer Mischung an sich transparenten Pfropfcopolymere mit homopolymerem PVC hergestellt wurden, opak sind.

In einer bevorzugten Ausführungsform der Erfindung weisen die mindestens zwei verschiedenen Pfropfcopolymere jeweils unabhängig voneinander eine Glasübergangstemperatur Tg der aufgepfropften Copolymerphase im Bereich von über 20 bis 120°C und/oder eine Glasübergangstemperatur Tg der Pfropfgrundlage im Bereich von -80 bis 20°C auf. In einer bevorzugten Ausführungsform der Erfindung liegt die Glasübergangstemperatur Tg der aufgepfropften Copolymerphase zwischen 40 und 90 °C. In einer bevorzugten Ausführungsform liegt die Tg der Pfropfgrundlage zwischen -60 und -20°C. Die Tg's der aufgepfropften Copolymerphase und der Pfropfgrundlage ergeben sich aus der Zusammensetzung der jeweils verwendeten Monomere.

In einer weiteren bevorzugten Ausführungsform der Erfindung enthält a) mindestens eines der verschiedenen Pfropfcopolymere 41 bis 70 Gew.-% an Pfropfgrundlage und 30 bis 59 Gew.-% an aufgepfropfter Copolymerphase, jeweils bezogen auf das Pfropfcopolymer, und/oder b) mindestens eines der verschiedenen Pfropfcopolymere 26 bis 40 Gew.-% an Pfropfgrundlage und 60 bis 74 Gew.-% an aufgepfropfter Copolymerphase, jeweils bezogen auf das Pfropfcopolymer, und/oder c) mindestens eines der verschiedenen Pfropfcopolymere 5 bis 25 Gew.-% an Pfropfgrundlage und 75 bis 95 Gew.-% an aufgepfropfter Copolymerphase, jeweils bezogen auf das Pfropfcopolymer.

Besonders bevorzugt sind solche Mischungen, die enthalten
A) 1 bis 99 Gew.-%, bezogen auf die Mischung, eines Vinylchlorid-Pfropfcopolymeren A enthaltend 30 bis 59 Gew.-%, bezogen auf das Vinylchlorid-Pfropfcopolymer A, einer zumindest teilweise aus Vinylchlorid hergestellten aufgepfropften Copolymerphase mit einer Glasübergangstemperatur Tg im Bereich von über 20 bis 120°C und 41 bis 70 Gew.-%, bezogen auf das Vinylchlorid-Pfropfcopolymer A, einer Pfropfgrundlage mit einer Glasübergangstemperatur Tg im Bereich von -80 bis 20°C, und/oder
B) 1 bis 99 Gew.-%, bezogen auf die Mischung, eines Vinylchlorid-Pfropfcopolymeren B enthaltend 60 bis 74 Gew.-%, bezogen auf das Vinylchlorid-Pfropfcopolymer B, einer zumindest teilweise aus Vinylchlorid hergestellten aufgepfropften Copolymerphase mit einer Glasübergangstemperatur Tg im Bereich von über 20 bis 120°C und 26 bis 40 Gew.-%, bezogen auf das Vinylchlorid-Pfropfcopolymer B, einer Pfropfgrundlage mit einer Glasübergangstemperatur Tg im Bereich von -80 bis 20°C, und/oder
C) 1 bis 99 Gew.-%, bezogen auf die Mischung, eines Vinylchlorid-Pfropfcopolymeren C enthaltend 75 bis 95 Gew.-%, bezogen auf das Vinylchlorid-Pfropfcopolymer C, einer zumindest teilweise aus Vinylchlorid hergestellten aufgepfropften Copolymerphase mit einer Glasübergangstemperatur Tg im Bereich von über 20 bis 120°C und 5 bis 25 Gew.-%, bezogen auf das Vinylchlorid-Pfropfcopolymer C, einer Pfropfgrundlage mit einer Glasübergangstemperatur Tg im Bereich von -80 bis 20°C, und
D) 0 bis 75 Gew.-%, bezogen auf die Mischung, weitere Bestandteile,
wobei mindestens zwei der unter A), B) und C) genannten Pfropfcopolymere enthalten sein müssen und wobei die Summe aus A), B) und C) mindestens 25 Gew.-% und die Summe aus A), B), C) und D) 100 Gew.-% ergibt.

Im Rahmen der vorliegenden Erfindung ist die jeweilige Pfropfgrundlage von einem oder von zwei oder von allen der verschiedenen Vinylchlorid-Pfropfcopolymere durch Copolymerisation von Vinylverbindungen herstellbar.

Die Vinylchlorid-Pfropfcopolymere werden im Emulsionsverfahren hergestellt. In einer bevorzugten Ausführungsform ist die jeweilige aufgepfropfte Copolymerphase von einem oder von zwei oder von allen der verschiedenen Vinylchlorid-Pfropfcopolymere aus 60 bis 100 Gew.-%, bevorzugt 80 bis 100 Gew.-%, Vinylchlorid und aus 0 bis 40 Gew.-%, bevorzugt 0 bis 20 Gew.-%, anderen polymerisierbaren Vinylverbindungen herstellbar.

In einer weiteren bevorzugten Ausführungsform ist die jeweilige Pfropfgrundlage von einem oder von zwei oder von allen der verschiedenen Vinylchlorid-Pfropfcopolymere vernetzt und, optional, ist die jeweilige aufgepfropfte Copolymerphase von einem oder von zwei oder von allen der verschiedenen Vinylchlorid-Pfropfcopolymere vernetzt.

In einer systematischen Untersuchung wurde außerdem gefunden, dass die Teilchengröße und die Vernetzung des in Emulsionsfahrweise hergestellten Pfropfcopolymers einen großen Einfluss auf die Transparenz daraus hergestellter Formkörper hat. Durch die Absenkung des Teilchendurchmessers eines Pfropfcopolymerisats mit vernetzter Pfropfgrundlage und unvernetzter Pfropfschale oder mit vernetzter Pfropfgrundlage und vernetzter Pfropfschale unterhalb bestimmter Werte wird die Transparenz einer daraus hergestellten Pressplatte stark verbessert.

Gegenstand der vorliegenden Erfindung sind somit auch Mischungen erhältlich durch ein Verfahren umfassend die Schritte:
a) Je verschiedenem Vinylchlorid-Pfropfcopolymer wird die Pfropfgrundlage durch Polymerisation hergestellt, wobei durch Wahl der verwendeten Monomere die Glasübergangstemperatur Tg der Pfropfgrundlage eingestellt wird,
b) Auf jede unter a) hergestellte Pfropfgrundlage wird durch Emulsionspolymerisation die jeweilige Copolymerphase aufgepfropft unter Erhalt des jeweiligen Vinylchlorid-Pfropfcopolymer-Latexes, wobei durch Wahl der verwendeten Monomere und ggf. Comonomere die Glasübergangstemperatur Tg der jeweiligen aufgepfropften Copolymerphase eingestellt wird, und wobei durch Wahl der jeweiligen Polymerisationsbedingungen die mittlere Teilchengröße jedes Vinylchlorid-Pfropfcopolymeren auf unter 300 nm, bevorzugt unter 200 nm, besonders bevorzugt unter 150 nm, und ganz besonders bevorzugt unter 100 nm, eingestellt wird,
c) Isolieren der jeweiligen Vinylchlorid-Pfropfcopolymere als Feststoffe von den jeweiligen Latices,
d) Mischen der jeweiligen Vinylchlorid-Pfropfcopolymer-Feststoffe unter Erhalt der Mischung nach einem der vorherigen Ansprüche.

Darüber hinaus ist Gegenstand der vorliegenden Erfindung ein Verfahren zur Herstellung einer Mischung enthaltend mindestens zwei verschiedene durch Emulsionspolymerisation hergestellte Vinylchlorid-Pfropfcopolymere, wobei die mindestens zwei verschiedenen Pfropfcopolymere jeweils eine Pfropfgrundlage und eine aufgepfropfte zumindest teilweise aus Vinylchlorid bestehende Copolymerphase enthalten, umfassend die Schritte:
a) Je verschiedenem Vinylchlorid-Pfropfcopolymer wird eine Pfropfgrundlage durch Polymerisation hergestellt, wobei durch Wahl der verwendeten Monomere die Glasübergangstemperatur Tg der Pfropfgrundlage eingestellt wird, und
b) auf jede der unter a) hergestellten Pfropfgrundlagen wird durch Emulsionspolymerisation eine Copolymerphase aufgepfropft unter Erhalt je eines Vinylchlorid-Pfropfcopolymer-Latexes, wobei durch Wahl der verwendeten Monomere und der gegebenenfalls verwendeten Comonomere die Glasübergangstemperatur Tg der jeweiligen aufgepfropften Copolymerphase so eingestellt wird, dass die Glasübergangstemperatur Tg der jeweiligen Pfropfgrundlage niedriger ist als die Glasübergangstemperatur Tg der jeweils aufgepfropften Copolymerphase und wobei durch Wahl der jeweiligen Polymerisationsbedingungen die mittlere Teilchengröße jedes Vinylchlorid-Pfropfcopolymeren auf unter 300 nm, bevorzugt unter 200 nm, besonders bevorzugt unter 150 nm, und ganz besonders bevorzugt unter 100 nm, eingestellt wird, und
c) Isolieren der jeweiligen Vinylchlorid-Pfropfcopolymere als Feststoffe aus den jeweiligen Vinylchlorid-Pfropfcopolymer-Latices, und
d) Mischen der jeweiligen Vinylchlorid-Pfropfcopolymer-Feststoffe und ggf. weitere Bestandteile unter Erhalt der Mischung,
wobei die verschiedenen Vinylchlorid-Pfropfcopolymere so hergestellt werden, dass sie sich durch ihre prozentuale Gewichtsverteilung an aufgepfropfter Copolymerphase und Pfropfgrundlage unterscheiden.

Die Emulsionspolymerisation wird bevorzugt semikontinuierlich ausgeführt. Bei der Herstellung der Pfropfgrundlage können Wasser, Initiatoren, Monomere, Emulgatoren und andere Hilfsmittel vorgelegt und teilweise dosiert werden. In einer bevorzugten Ausführungsform werden Wasser und die Gesamtmenge an Emulgator vorgelegt und die Monomere sowie die Initiatoren dosiert. Die Zulaufgeschwindigkeit der Dosierungen richtet sich nach der Umsatzgeschwindigkeit. Die Polymerisationsdauer wird durch die Menge an eingesetztem Initiator auf ein bis drei Stunden eingestellt. Nach Beendigung der Polymerisation wird die Pfropfgrundlage aufgearbeitet und für die Herstellung des Pfropfcopolymers vorgelegt. Vinylchlorid und gegebenenfalls andere polymerisierbare Vinylverbindungen werden in 10 min bis 180 min zudosiert. In einer bevorzugten Ausführungsform wird die VC-Menge in eine Vorlagemenge und eine zuzudosierende Menge geteilt. Hierbei werden 5 - 20 Teile VC vorgelegt (im Schuss), bis zum Druckabfall polymerisiert und mit der Dosierung der VC-Restmenge begonnen. Die Temperatur wird angepasst, um den gewünschten K-Wert einzustellen. Um die Polymerisation voranzutreiben, wird parallel Initiator dosiert. Es kann Emulgator zugegeben werden, um die Dispersionsstabilität zu erhöhen. Der Feststoffgehalt der auspolymerisierten Dispersion liegt zwischen 20 und 60 Gew.-% und bevorzugt zwischen 30 und 55 Gew.-%.

Geeignete Vinylverbindungen für die Pfropfgrundlage sind zum Beispiel Acrylsäureester oder Methacrylsäureester (kurz: (Meth)acrylsäureester). Auch Butadien, 2-Chlor-Butadien, 1-Buten, Isopren, Vinylidenchlorid, Vinylacetat, Vinylalkylether, etc. können als Vinylverbindung verwendet werden.

Für die Pfropfung wird vorzugsweise nur Vinylchlorid verwendet. Es können aber auch (Meth)acrylsäureester, die über ein bis 12 C-Atome in der Alkylkette des veresterten linearen, verzweigten oder zyklischen Alkohols, wie z.B. Methylacrylat, Ethylacrylat, Propylacrylat, Butylacrylat, tert.-Butylacrylat, Pentylacrylat, iso-Pentylacrylat, Cyclohexylacrylat, Ethylhexylacrylat, Methylmethacrylat, Ethylmethacrylat, Propylmethlacrylat, Butylmethacrylat, tert.-Butylmethacrylat, Pentylmethacrylat, iso-Pentylmethacrylat, Ethylhexylmethacrylat, Cyclohexylmethacrylat, etc. homo- oder copolymerisiert werden.

In Schritt b) des erfindungsgemäßen Verfahrens wird die Copolymerphase typischerweise unter Verwendung mindestens eines Emulgators durch Emulsionspolymerisation aufgepfropft, wobei vorzugsweise 60 bis 100 Gew.-% der Emulgatormenge bezogen auf die gesamte Emulgatormenge vorgelegt wird.

Die Polymerisationstemperatur bei der Herstellung jeder der Pfropfgrundlagen liegt typischerweise zwischen 20 und 90 °C, bevorzugt zwischen 60 und 85 °C.

Die Polymerisationstemperatur bei der Herstellung jeder der aufgepfropften Copolymerphasen liegt typischerweise zwischen 45 und 90 °C, bevorzugt zwischen 55 und 75 °C.

Geeignete ionische Emulgatoren sind Alkylsulfonate, Arylsulfonate, Alkylsulfate, Alkylethersulfate, Fettsäuresalze, Diarylsulfonate, etc. Es können außerdem nichtionische Emulgatoren, wie bspw. Alkyletheralkohole mit zwei bis 20 C-Atomen in der Alkylkette und ein bis 20 Ethylenglykoleinheiten, Fettalkohole, etc. allein oder in Kombination mit ionischen Emulgatoren verwendet werden. Die Gesamtmenge an Emulgator liegt zwischen 0,1 bis 5 Gew.-% bezogen auf die eingesetzte Monomermenge.

Geeignete Initiatoren sind wasserlösliche Peroxide, die allein durch den thermischen Zerfall Radikale bilden oder in Kombination mit einem Reduktionsmittel und gegebenenfalls einem Katalysator zum Zerfall gebracht werden. Die Menge der verwendeten Initiatoren liegt erfahrungsgemäß zwischen 0,01 bis 0,5 Gew.-% bezogen auf die eingesetzten Monomere.

In einer bevorzugten Ausführungsform der Erfindung wird die Teilchengröße des Pfropfcopolymers auf unter 300 nm, bevorzugt unter 200 nm, besonders bevorzugt unter 150 nm, und ganz besonders bevorzugt unter 100 nm eingestellt und die Pfropfgrundlage durch Copolymerisation mit einem oder mehreren verschiedenen Monomeren, welche zwei oder mehr nicht miteinander konjugierte ethylenisch ungesättigte Doppelbindungen enthalten, vernetzt. Optional kann auch zusätzlich die aufgepfropfte Copolymerphase durch Copolymerisation mit einem oder mehreren verschiedenen Monomeren, welche zwei oder mehr nicht miteinander konjugierte ethylenisch ungesättigte Doppelbindungen enthalten, vernetzt werden.

In einer weiteren bevorzugten Ausführungsform der Erfindung wird a) die Pfropfgrundlage und die Pfropfschale nicht vernetzt oder b) die Pfropfgrundlage nicht vernetzt und die Pfropfschale vernetzt. In Bezug auf die Transparenz kann in dieser Ausführungsform der Erfindung die Teilchengröße des Pfropfcopolymers beliebig eingestellt werden, weil sie nur einen untergeordneten Einfluss auf die Transparenz eines daraus hergestellten Formkörpers hat.

Geeignete Verbindungen für die Vernetzung sind Diallylphthalat, Allylmethacrylat, Allylacrylat, Ethylenglykoldimethacrylat, Propylengiykoldimethacrylat, Butylenglykoldiacrylat, Trimethylenglykoldiacrylat, Glycidylmethacrylat, Glycidylacrylat etc.

In dem erfindungsgemäßen Verfahren wird mittels Emulsionspolymerisation ein Vinylchlorid-Pfropfcopolymer-haltiger Latex erhalten. Der Feststoff wird dann entweder durch Zugabe eines Elektrolytes, Koagulation und mechanischen Trennverfahren wie Filtration, Dekantieren, Zentrifugieren des Latex mit nachfolgender Trocknung oder durch Sprühtrocknung abgetrennt.

Gegenstand der vorliegenden Erfindung ist auch die Verarbeitung der erfindungsgemäßen Mischung aus Vinylchlorid-Pfropfcopolymeren, die sich im Gehalt der weichen Pfropfgrundlage unterscheiden, zu Artikeln bzw. Formkörpern mit thermoplastisch elastomeren Eigenschaften und, optional, guter Transparenz.

Bevorzugte erfindungsgemäße Artikel weisen eine Transmission von mindestens 65%, bevorzugt mindestens 75%, und besonders bevorzugt mindestens 85%, und/oder einen Haze-Wert von höchstens 60, bevorzugt von höchstens 50, und besonders bevorzugt von höchstens 40, auf.

Gegenstand der Erfindung ist auch die Verwendung der erfindungsgemäßen Mischung zur Einstellung des Weichheitsgrades eines PVC-Artikels. sowie die Verwendung der oben beschriebenen Mischungen zur Herstellung eines Artikels, vorzugsweise zur Herstellung von Folien mittels Extrusion und/oder Kalandrierung oder zur Herstellung von Formkörpern mittels Extrusion oder Spritzguss.

In den folgenden Beispielen wird das erfindungsgemäße Verfahren zur Herstellung von Pfropfcopolymerisaten des Vinylchlorids mit hoher Transparenz beschrieben,

### Beispiele

### Beispiel 1

### Pfropfgrundlage:

In einem 10-L-Rührreaktor mit einem wassergekühlten Doppelmantel und ausgestattet mit einem Blattrührer wurden 1166 g vollentsalztes Wasser, 68,6 g Butylacrylat, 3088 g 1 %ige Kaliummyristatlösung und 0,63 g Kaliumperoxodisulfat vorgelegt und auf 80 °C aufgeheizt. Nachdem die Reaktion angesprungen war, wurde mit der Dosierung von 686 g einer 0,3 %igen wässrigen Kaliumperoxodisulfatösung in 180 min begonnen. Parallel wurden 1990 g Butylacrylat in 180 min dosiert. Nach DosierEnde wurde die Reaktor-Innentemperatur noch für 60 min gehalten und danach abgekühlt. Es wurden 6894 g Dispersion ausgefahren mit einem Feststoffgehalt von 30 Gew-%, Oberflächenspannung 51,6 mN/m und pH-Wert 7,6. Der mittlere volumenbezogene Teilchendurchmesser beträgt 12 nm.

### Pfropfcopolymer:

In einem 10-L-Druckautoklaven mit wassergekühltem Doppelmantel und Blattrührer wurden 124 g Wasser, 1937 g einer 1 %igen Kaliummyristatlösung, 3500 g der Pfropfgrundlage und 1283 g Vinylchlorid vorgelegt und auf 68°C aufgeheizt. Bei Erreichen der Polymerisationstemperatur wurde mit der Dosierung von Kaliumperoxodisulfat und Ascorbinsäure begonnen. Die Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Die Dispersion wurde ausgefahren. Der Feststoffgehalt der Dispersion betrug 31,3 Gew.-%, die Oberflächenspannung 56,6 mN/m, der pH-Wert 8,3. Der mittlere volumenbezogene Teilchendurchmesser beträgt 68 nm. Der Ansatz wurde mit Calciumchlorid gefällt und abgenutscht. Der Rückstand wurde bei 30 °C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 48,6 Gew-% bestimmt.

### Beispiel 2

### Pfropfgrundlage:

Die Pfropfgrundlage wurde in Anlehnung an Beispiel 1 hergestellt. Es wurden 6936 g Dispersion ausgefahren mit einem Feststoffgehalt von 30 Gew-%, Oberflächenspannung 49 mN/m und pH-Wert 7,5. Der mittlere volumenbezogene Teilchendurchmesser beträgt 14 nm.

### Pfropfcopolymer:

Es wurden 407 g Wasser, 2471 g einer 1 %igen Kaliummyristatlösung, 2330 g der Pfropfgrundlage und 1633 g Vinylchlorid vorgelegt und in Anlehnung an Beispiel 1 polymerisiert. Die Dispersion wurde ausgefahren. Der Feststoffgehalt der Dispersion betrug 30,1 %, die Oberflächenspannung 57,8 mN/m, der pH-Wert 8,8. Der mittlere volumenbezogene Teilchendurchmesser beträgt 64 nm. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 34,4 Gew-% bestimmt.

### Beispiel 3:

### Pfropfgrundlage:

In einem 10-L-Rührreaktor wurden 4156 g VE-Wasser, 0,4 g Allylmethacrylat, 78 g Butylacrylat, 705,9 g Kaliummyristat (Konzentration 5 Gew-%) und 0,720 g Kaliumperoxodisulfat vorgelegt und auf 80 °C aufgeheizt. Nachdem die Reaktion angesprungen war wurde mit der Dosierung von 784,3 g einer 0,3 %igen wässrigen Kaliumperoxodisulfatösung in 180 min begonnen. Parallel wurden 11,36 g Allylmethacrylat und 2263 g Butylacrylat in 180 min dosiert. Nach Dosierende wurde die Reaktor-Innentemperatur noch für 60 min gehalten und danach abgekühlt.

Es wurden 7911 g der Dispersion erhalten. Der Feststoffgehalt betrug 29,8 %, die Oberflächenspannung 52,2 mN/m und der pH-Wert 7,6. Der mittlere volumenbezogene Teilchendurchmesser beträgt 12 nm.

### Pfropfcopolymer:

In einem 10-L-Druckautoklaven mit wassergekühltem Doppelmantel und Blattrührer wurden 1367 g Wasser, 332 g einer 5 %igen Kaliummyristatlösung, 3087 g der Pfropfgrundlage, 4,32 g Diallylphthalat und 1076 g Vinylchlorid vorgelegt und auf 68 °C aufgeheizt. Bei Erreichen der Polymerisationstemperatur wurde mit der Dosierung von Kaliumperoxodisulfat und Ascorbinsäure begonnen. Die Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Die Dispersion wurde ausgefahren. Der Feststoffgehalt betrug 30,7 %, die Oberflächenspannung 56,7 mN/m, der pH-Wert 7,7. Der mittlere volumenbezogene Teilchendurchmesser beträgt 61 nm. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 46,9 Gew-% bestimmt.

### Beispiel 4:

### Pfropfgrundlage:

Es wurde die Pfropfgrundlage aus Beispiel 3 verwendet.

### Pfropfcopolymer:

In einem 10-L-Druckautoklaven mit wassergekühltem Doppelmantel und Blattrührer wurden 2365 g Wasser, 387,3 g einer 5 %igen Kaliummyristatlösung, 2506 g der Pfropfgrundlage, 6,347 g Diallylphthalat und 1580 g Vinylchlorid vorgelegt und auf 68°C aufgeheizt. Bei Erreichen der Polymerisationstemperatur wurde mit der Dosierung von Kaliumperoxodisulfat und Ascorbinsäure begonnen. Die Dosiergeschwindigkeit wurde so angepasst, dass das Delta zwischen Innentemperatur und Mantelvorlauftemperatur ca. 10 °C betrug. Der Ansatz wurde bei einem Druckabfall von 4 bar auf Kühlung gesetzt und entspannt. Die Dispersion wurde ausgefahren. Der Feststoffgehalt der Dispersion betrug 30,5 %, die Oberflächenspannung 58,5 mN/m, der pH-Wert 8,0. Der mittlere volumenbezogene Teilchendurchmesser beträgt 58 nm. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 33 Gew-% bestimmt.

### Beispiel 5:

### Pfropfgrundlage:

Der Ansatz aus Beispiel 3 wurde wiederholt. Es wurden 7909 g einer wässrigen Dispersion ausgefahren. Der Feststoffgehalt der Dispersion betrug 30 %, die Oberflächenspannung 54,4 mN/m, der pH-Wert 7,4. Der mittlere volumenbezogene Teilchendurchmesser beträgt 12 nm.

### Pfropfcopolymer:

Es wurden 3144 g Wasser, 387,3 g einer 5 %igen Kaliummyristatlösung, 1400 g der Pfropfgrundlage, 1906 g Vinylchlorid und 7,63 g Diallylphthalat vorgelegt und in Anlehnung an Beispiel 3 polymerisiert. Die Dispersion wurde ausgefahren. Der Feststoffgehalt der Dispersion betrug 29,6 %, die Oberflächenspannung 51,9 mN/m, der pH-Wert 8,1. Der mittlere volumenbezogene Teilchendurchmesser beträgt 56 nm. Der Ansatz wurde mit Calciumchlorid gefällt und abgenutscht. Der Rückstand wurde bei 30°C im Umluft-Trockner bis auf eine Restfeuchte < 0,3 % getrocknet und mit der Retsch-Zentrifugalmühle ZM 200 feingemahlen. Der PBA-Anteil wurde durch eine Sauerstoffanalyse zu 19,2 Gew-% bestimmt.

Die Pulver der Pfropfcopolymere wurden auf einer Zweirollenwalze zu Walzfellen verarbeitet und verpresst. In der nachfolgenden Tabelle 1 sind der Polybutylacrylat-Anteil, die Vernetzung, die Teilchengröße der Pfropfcopolymere sowie die optischen Eigenschaften (Transmission, Haze) der Pressplatten aufgeführt.

### Zur experimentellen Durchführung:

### Teilchengrößenmessung:

Die Teilchengrößenverteilungen wurden mit einem Microtrac Blue-Wave der S 3500-Serie von Particle-Metrix gemessen. Der zulässige Messbereich liegt zwischen 0,01 und 2000 µm. Für die Messung wurde eine Standardprozedur für Dispersionen angelegt, in der bestimmte physikalische Eigenschaften der Dispersion hinterlegt sind. Vor der Messung werden drei Tropfen Hellmanex^{®} der Firma Hellmanex-Analytics mit einer 3-ml-Einwegpipette zu dem vollentsalztem Wasser in die Zirkulationseinheit gegeben. Die Sauberkeit des Messsystems wird durch eine Nullmessung überprüft. Es wird solange vorsichtig Dispersion in die Probeneinheit gegeben, bis ein Loading-Factor von ca. 0,004 erreicht wird. In der Regel sind das 1 bis 2 Tropfen Dispersion. Die Messdauer beträgt 30 s. Die Auswertung der Messung erfolgt automatisch. Es wird der mittlere volumenbezogene Teilchendurchmesser verwendet.

### Zweirollen-Walzwerk (inklusive Verarbeitungsbedingungen und Rezeptur)

Zur Bestimmung mechanischer Werte und optischer Eigenschaften müssen Probekörper bereitgestellt werden. Die Herstellung der Walzfelle erfolgt unter folgenden Bedingungen.

**Rezeptur (Spatelmischung)**

| | | |
|---|---|---|
| 100 | phr | Polymer |
| 1,5 | phr | BaZn-Stabilisator (Baerostab UBZ 171) |
| 3,0 | phr | expoxydiertes Sojabohnenöl (Edenol D 81) |
| 0,1 | phr | Isotridecylstearat (Loxiol G 40) |
| 0,2 | phr | hochmolekularer Mehrkomponentenester (Loxiol G 72) |
| 0,1 | phr | Calciumstearat (Ceasit SW) |

### Walzwerk (Schwabenthan)

Walzenmaterial: verchromte Oberflächen
Walzendurchmesser: 150 mm
Drehzahlverhältnis: 17/21 1/min
Walzentemperatur: 140 °C
Walzdauer: 5 min

### Ausführung:

Das Pulver-Compound wird zur Bildung einer zusammenhängenden Masse (Fell) auf die Walze gegeben. Nach Fellbildung wird das Fell 3 min "geschnitten" und "gewendet". Dann die Walzfelldicke auf 1,1 mm einstellen und das Fell noch weitere 2 min ohne Schneiden und Wenden auf der Walze plastifizieren. Nach vorgegebener Walzzeit wird das Walzfell abgenommen.

### Presse

### 30-t-Laborpresse (Werner & Pfleiderer URH 30)

Pressfläche: 350 x 350 mm
Pressbleche: verchromte Flächen
Pressrahmen: 220 x 220 x 1,0 mm

### Ausführung:

Zur Herstellung der Pressplatten werden die zuvor gefertigten Walzfelle entsprechend der verwendeten Rahmengröße zugeschnitten, in den Rahmen eingelegt und zusammen mit den die Außenflächen bildenden Pressblechen in die Laborpresse eingelegt. Unter den nachfolgend genannten Bedingungen werden die Felle zu einer Pressplatte ausgeformt.

| | |
|---|---|
| Presstemperatur: 150 °C | |
| ND-Pressdruck: 30 bar | ND-Presszeit: 2 min |
| HD-Pressdruck: 200 bar | HD-Presszeit: 3 min |
| Entformtemperatur: 40 °C | |
| Kühldruck: 200 bar | Abkühlzeit: ca. 8 min |

### Transmission und Haze (Großwinkel-Streuung)

Zur Beurteilung der Transparenz einer Folie werden zwei Werte herangezogen:
- Die Gesamttransmission (hier: "Transmission"), die das Verhältnis von durchgelassenem zu einfallendem Licht darstellt und von den Absorptionseigenschaften sowie von den Oberflächenbedingungen abhängig ist
- Die Großwinkelstreuung (Haze), welche ein Maß für die Trübung ist.

### Messung:

Die Messung der Transmission sowie die Bestimmung der Großwinkelstreuung der über Walzen/Pressen erzeugten Halbzeuge erfolgt mit dem Transparenzmessgerät Haze-Guard Dual der Firma Byk-Gardner.

Die zu messende Probe wird senkrecht beleuchtet und das durchgelassene Licht in einer integrierenden Kugel photoelektrisch gemessen. Hierbei wird das senkrecht durchgelassene Licht zur Transparenzbeurteilung sowie das im Winkel von 2° zur Einstrahlungsachse streuende Licht zur Beurteilung der Trübung (Haze) gemessen. Die Messungen werden nach ISO 13468 durchgeführt, dadurch ist gewährleistet, das die Messbedingungen bei der Kalibrierung sowie bei der Messung gleich sind.

**Tabelle 1: Übersicht Versuchsbeispiele und daraus hergestellte Pressplatten**

| PatentBeispiele | PBA-Anteil (Gew-%) | Microtrac MV (nm) | Shore-Härte A | Shore-Härte D | Dicke Pressplatte (mm) | Transmission, % | Haze | Bemerkung |
|---|---|---|---|---|---|---|---|---|
| Beispiel 1 | 48,6 | 68 | 88 | 28 | 1,46 | 84,7 | 11,2 | Pfropfgrundlage und Pfropfschale unvemetzt |
| Beispiel 2 | 34,4 | 64 | | 53 | 1,46 | 77,2 | 36,5 | |
| Beispiel 3 | 46,9 | 61 | 85 | 26 | 1,50 | 84 | 13,2 | Pfropfgrundlage und Pfropfschale vernetzt und TGV < 150 nm |
| Beispiel 4 | 33 | 58 | 97 | 46 | 1,68 | 80,7 | 6,92 | |
| Beispiel 5 | 19,2 | 56 | 97 | 59 | 1,74 | 74,8 | 9,08 | |
| Mischungsbeispiel 1 | 29,6 | | 94 | 59 | 1,67 | 75,4 | 16,4 | 0,75 Beispiel 4 + 0,25 Beispiel 5 |
| Mischungsbeispiel 2 | 41,5 | | | 41 | 1,56 | 78,4 | 24,4 | 0,50 Beispiel 1 +0,50 Beispiel2 |
| Mischungsbeispiel 3 | 40 | | 92 | 38 | 1,49 | 69,9 | 93,2 | 0,75 Beispiel 3 + 0,25 Beispiel5 |
| Vinnolit VK 710 | ca. 50 | | 85 | 28 | 1,48 | 78,0 | 65,8 | Wettbewerbsmuster |
| Vinnolit K 707 E | ca. 50 | | 79 | 25 | 1,81 | 53,9 | 68,8 | |

Mischungen, bestehend aus den erfindungsgemäßen Pfropfcopolymeren, die sich im PBA-Gehalt unterscheiden, weisen eine hohe Transparenz auf. Das ist ein großer Vorteil gegenüber Mischungen eines transparenten Pfropfcopolymers mit S-PVC, die opak sind. Die Pressplatte des transparenten Pfropfcopolymers aus Beispiel 3 wird durch einen Anteil von 25 Gew-% S-PVC opak.

## Patentansprüche

1. Mischung enthaltend mindestens zwei verschiedene durch Emulsionspolymerisation hergestellte Vinylchlorid-Pfropfcopolymere, wobei die mindestens zwei verschiedenen Pfropfcopolymere jeweils eine Pfropfgrundlage und eine aufgepfropfte zumindest teilweise aus Vinylchlorid bestehende Copolymerphase enthalten, **dadurch gekennzeichnet, dass** sich die Pfropfcopolymere durch ihre prozentuale Gewichtsverteilung an Pfropfgrundlage und aufgepfropfter Copolymerphase unterscheiden, und wobei bei jedem der Pfropfcopolymere die Glasübergangstemperatur Tg der Pfropfgrundlage niedriger ist als die Glasübergangstemperatur Tg der aufgepfropften Copolymerphase.

2. Mischung nach einem der vorherigen Ansprüche,
a) wobei mindestens eines der verschiedenen Pfropfcopolymere 41 bis 70 Gew.-% an Pfropfgrundlage und 30 bis 59 Gew.-% an aufgepfropfter Copolymerphase enthält, jeweils bezogen auf das Pfropfcopolymer, und/oder
b) wobei mindestens eines der verschiedenen Pfropfcopolymere 26 bis 40 Gew.-% an Pfropfgrundlage und 60 bis 74 Gew.-% an aufgepfropfter Copolymerphase enthält, jeweils bezogen auf das Pfropfcopolymer, und/oder
c) wobei mindestens eines der verschiedenen Pfropfcopolymere 5 bis 25 Gew.-% an Pfropfgrundlage und 75 bis 95 Gew.-% an aufgepfropfter Copolymerphase enthält, jeweils bezogen auf das Pfropfcopolymer.

3. Mischung nach einem der vorherigen Ansprüche, enthaltend
A) 1 bis 99 Gew.-%, bezogen auf die Mischung, eines Vinylchlorid-Pfropfcopolymeren A enthaltend 30 bis 59 Gew.-%, bezogen auf das Vinylchlorid-Pfropfcopolymer A, einer zumindest teilweise aus Vinylchlorid hergestellten aufgepfropften Copolymerphase mit einer Glasübergangstemperatur Tg im Bereich von über 20 bis 120°C und 41 bis 70 Gew.-%, bezogen auf das Vinylchlorid-Pfropfcopolymer A, einer Pfropfgrundlage mit einer Glasübergangstemperatur Tg im Bereich von -80 bis 20°C, und/oder
B) 1 bis 99 Gew.-%, bezogen auf die Mischung, eines Vinylchlorid-Pfropfcopolymeren B enthaltend 60 bis 74 Gew.-%, bezogen auf das Vinylchlorid-Pfropfcopolymer B, einer zumindest teilweise aus Vinylchlorid hergestellten aufgepfropften Copolymerphase mit einer Glasübergangstemperatur Tg im Bereich von über 20 bis 120°C und 26 bis 40 Gew.-%, bezogen auf das Vinylchlorid-Pfropfcopolymer B, einer Pfropfgrundlage mit einer Glasübergangstemperatur Tg im Bereich von -80 bis 20°C, und/oder
C) 1 bis 99 Gew.-%, bezogen auf die Mischung, eines Vinylchlorid-Pfropfcopolymeren C enthaltend 75 bis 95 Gew.-%, bezogen auf das Vinylchlorid-Pfropfcopolymer C, einer zumindest teilweise aus Vinylchlorid hergestellten aufgepfropften Copolymerphase mit einer Glasübergangstemperatur Tg im Bereich von über 20 bis 120°C und 5 bis 25 Gew.-%, bezogen auf das Vinylchlorid-Pfropfcopolymer C, einer Pfropfgrundlage mit einer Glasübergangstemperatur Tg im Bereich von -80 bis 20°C, und
D) 0 bis 75 Gew.-%, bezogen auf die Mischung, weitere Bestandteile, wobei mindestens zwei der unter A), B) und C) genannten Pfropfcopolymere enthalten sein müssen und wobei die Summe aus A), B) und C) mindestens 25 Gew.-% und die Summe aus A), B), C) und D) 100 Gew.-% ergibt.

4. Mischung nach einem der vorherigen Ansprüche, wobei die jeweilige Pfropfgrundlage von einem oder von zwei oder von allen der verschiedenen Vinylchlorid-Pfropfcopolymere durch Copolymerisation von Vinylverbindungen herstellbar ist.

5. Mischung nach einem der vorherigen Ansprüche, wobei die jeweilige aufgepfropfte Copolymerphase von einem oder von zwei oder von allen der verschiedenen Vinylchlorid-Pfropfcopolymere aus 60 bis 100 Gew.-% Vinylchlorid und aus 0 bis 40 Gew.-% anderen polymerisierbaren Vinylverbindungen herstellbar ist.

6. Mischung nach einem der vorherigen Ansprüche, wobei die jeweilige Pfropfgrundlage von einem oder von zwei oder von allen der verschiedenen Vinylchlorid-Pfropfcopolymere vernetzt ist und, optional, wobei die jeweilige aufgepfropfte Copolymerphase von einem oder von zwei oder von allen der verschiedenen Vinylchlorid-Pfropfcopolymere vernetzt ist.

7. Mischung nach einem der vorherigen Ansprüche, erhältlich durch ein Verfahren umfassend die Schritte:
a) Je verschiedenem Vinylchlorid-Pfropfcopolymer wird die Pfropfgrundlage durch Polymerisation hergestellt, wobei durch Wahl der verwendeten Monomere die Glasübergangstemperatur Tg der Pfropfgrundlage eingestellt wird,
b) Auf jede unter a) hergestellte Pfropfgrundlage wird durch Emulsionspolymerisation die jeweilige Copolymerphase aufgepfropft unter Erhalt des jeweiligen Vinylchlorid-Pfropfcopolymer-Latexes, wobei durch Wahl der verwendeten Monomere und ggf. Comonomere die Glasübergangstemperatur Tg der jeweiligen aufgepfropften Copolymerphase eingestellt wird, und wobei durch Wahl der jeweiligen Polymerisationsbedingungen die mittlere Teilchengröße jedes Vinylchlorid-Pfropfcopolymeren auf unter 300 nm eingestellt wird,
c) Isolieren der jeweiligen Vinylchlorid-Pfropfcopolymere als Feststoffe von den jeweiligen Latices,
d) Mischen der jeweiligen Vinylchlorid-Pfropfcopolymer-Feststoffe unter Erhalt der Mischung nach einem der vorherigen Ansprüche.

8. Verfahren zur Herstellung einer Mischung enthaltend mindestens zwei verschiedene durch Emulsionspolymerisation hergestellte Vinylchlorid-Pfropfcopolymere, wobei die mindestens zwei verschiedenen Pfropfcopolymere jeweils eine Pfropfgrundlage und eine aufgepfropfte zumindest teilweise aus Vinylchlorid bestehende Copolymerphase enthalten, umfassend die Schritte:
a) Je verschiedenem Vinylchlorid-Pfropfcopolymer wird eine Pfropfgrundlage durch Polymerisation hergestellt, wobei durch Wahl der verwendeten Monomere die Glasübergangstemperatur Tg der Pfropfgrundlage eingestellt wird, und
b) auf jede der unter a) hergestellten Pfropfgrundlagen wird durch Emulsionspolymerisation eine Copolymerphase aufgepfropft unter Erhalt je eines Vinylchlorid-Pfropfcopolymer-Latexes, wobei durch Wahl der verwendeten Monomere und der gegebenenfalls verwendeten Comonomere die Glasübergangstemperatur Tg der jeweiligen aufgepfropften Copolymerphase so eingestellt wird, dass die Glasübergangstemperatur Tg der jeweiligen Pfropfgrundlage niedriger ist als die Glasübergangstemperatur Tg der jeweils aufgepfropften Copolymerphase und wobei durch Wahl der jeweiligen Polymerisationsbedingungen die mittlere Teilchengröße jedes Vinylchlorid-Pfropfcopolymeren auf unter 300 nm eingestellt wird, und
c) Isolieren der jeweiligen Vinylchlorid-Pfropfcopolymere als Feststoffe aus den jeweiligen Vinylchlorid-Pfropfcopolymer-Latices, und
d) Mischen der jeweiligen Vinylchlorid-Pfropfcopolymer-Feststoffe und ggf. weitere Bestandteile unter Erhalt der Mischung,
wobei die verschiedenen Vinylchlorid-Pfropfcopolymere so hergestellt werden, dass sie sich durch ihre prozentuale Gewichtsverteilung an aufgepfropfter Copolymerphase und Pfropfgrundlage unterscheiden.

9. Verfahren nach Anspruch 8, wobei in Schritt b) die Copolymerphase durch Emulsionspolymerisation unter Verwendung mindestens eines Emulgators aufgepfropft wird, wobei vorzugsweise 60 bis 100 Gew.-% der Emulgatormenge bezogen auf die gesamte Emulgatormenge vorgelegt wird.

10. Verfahren nach einem der Ansprüche 8 bis 9, wobei die Polymerisationstemperatur bei der Herstellung jeder Pfropfgrundlage zwischen 20 und 90 °C liegt.

11. Verfahren nach einem der Ansprüche 8 bis 10, wobei die Polymerisationstemperatur bei der Herstellung jeder aufgepfropften Copolymerphase zwischen 45 und 90 °C liegt.

12. Artikel, hergestellt unter Verwendung einer Mischung nach einem der Ansprüche 1 bis 7 oder einer Mischung hergestellt nach einem Verfahren nach einem der Ansprüche 8 bis 11.

13. Artikel nach Anspruch 12, wobei der Artikel eine Transmission von mindestens 65% und/oder einen Haze-Wert von höchstens 60 aufweist.

14. Verwendung einer Mischung nach einem der Ansprüche 1 bis 7 oder einer Mischung hergestellt nach einem Verfahren nach einem der Ansprüche 8 bis 11 zur Einstellung des Weichheitsgrades eines PVC-Artikels.

15. Verwendung einer Mischung nach einem der Ansprüche 1 bis 7 oder einer Mischung hergestellt nach einem Verfahren nach einem der Ansprüche 8 bis 11 zur Herstellung eines Artikels, vorzugsweise zur Herstellung von Folien mittels Extrusion und/oder Kalandrierung oder zur Herstellung von Formkörpern mittels Extrusion oder Spritzguss.

## Claims

1. A blend, containing at least two different vinyl chloride graft copolymers prepared by emulsion polymerization, wherein said at least two different graft copolymers each contain a graft base and a grafted copolymer phase at least partially consisting of vinyl chloride, **characterized in that** said graft copolymers differ in their percentage weight distribution of graft base and grafted copolymer phase, and wherein for each of the graft copolymers the glass transition temperature T_{g} of the graft base is lower than the glass transition temperature T_{g} of the grafted copolymer phase.

2. The blend according to any one of the preceding claims,
a) wherein at least one of the different graft copolymers contains 41 to 70 wt% of graft base and 30 to 59 wt% of grafted copolymer phase, each based on said graft copolymer, and/or
b) wherein at least one of the different graft copolymers contains 26 to 40 wt% of graft base and 60 to 74 wt% of grafted copolymer phase, each based on said graft copolymer, and/or
c) wherein at least one of the different graft copolymers contains 5 to 25 wt% of graft base and 75 to 95 wt-% of grafted copolymer phase, each based on said graft copolymer.

3. The blend according to any one of the preceding claims, containing
A) 1 to 99 wt%, based on said blend, of a vinyl chloride graft copolymer A, containing 30 to 59 wt%, based on said vinyl chloride graft copolymer A, of a grafted copolymer phase at least partially prepared from vinyl chloride, having a glass transition temperature T_{g} in the range of above 20 to 120 °C, and 41 to 70 wt%, based on said vinyl chloride graft copolymer A, of a graft base having a glass transition temperature Tg in the range of -80 to 20 °C, and/or
B) 1 to 99 wt%, based on said blend, of a vinyl chloride graft copolymer B containing 60 to 74 wt%, based on said vinyl graft copolymer B, of a grafted copolymer phase at least partially prepared from vinyl chloride, having a glass transition temperature T_{g} in the range of above 20 to 120 °C, and 26 to 40 wt%, based on said vinyl graft copolymer B, of a graft base having a glass transition temperature T_{g} in the range of -80 to 20 °C, and/or
C) 1 to 99 wt%, based on said blend, of a vinyl chloride graft copolymer C containing 75 to 95 wt%, based on said vinyl chloride graft copolymer C, of a grafted copolymer phase at least partially prepared from vinyl chloride, having a glass transition temperature Tg in the range of above 20 to 120 °C, and 5 to 25 wt%, based on said vinyl chloride graft copolymer C, of a graft base having a glass transition temperature T_{g} in the range of -80 to 20 °C, and
D) 0 to 75 wt%, based on said blend, of further ingredients,
wherein at least two of the graft copolymers mentioned in A), B) and C) have to be included, and wherein the sum of A), B) and C) adds up to at least 25 wt% and the sum of A), B), C) and D) adds up to 100 wt%.

4. The blend according to any one of the preceding claims, wherein the respective graft base of one or two or of all of the different vinyl chloride graft copolymers can be prepared by copolymerization of vinyl compounds.

5. The blend according to any one of the preceding claims, wherein the respective grafted copolymer phase of one or two or of all of the different vinyl chloride graft copolymers can be prepared from 60 to 100 wt% of vinyl chloride and from 0 to 40 wt% of other polymerizable vinyl compounds.

6. The blend according to any one of the preceding claims, wherein the respective graft base of one or two or of all of the different vinyl chloride graft copolymers is cross-linked and, optionally, wherein the respective grafted copolymer phase of one or two or of all of the different vinyl chloride graft copolymers is cross-linked.

7. The blend according to any one of the preceding claims, obtainable by a method comprising the steps:
a) for each of the different vinyl graft copolymers, the graft base is prepared by polymerization, wherein by appropriately selecting the monomers used the glass transition temperature Tg of the graft base is adjusted,
b) onto each of the graft bases prepared in a) the respective copolymer phase is grafted by emulsion polymerization to obtain the respective vinyl chloride graft copolymer latex, wherein by appropriately selecting the monomers and, optionally, comonomers used, the glass transition temperature Tg of the respective grafted copolymer phase is adjusted, and wherein by appropriately selecting the respective polymerization conditions the average particle size of each of the vinyl chloride graft copolymers is adjusted to less than 300 nm.
c) isolating the respective vinyl chloride graft copolymers as solids from the respective latices,
d) mixing the respective vinyl chloride graft copolymer solids to obtain said blend according to any one of the preceding claims.

8. A method for preparing a blend containing at least two different vinyl chloride graft copolymers prepared by emulsion polymerization, wherein said at least two different graft copolymers each contain a graft base and a grafted copolymer phase at least partially consisting of vinyl chloride, comprising the steps:
a) for each of the different vinyl chloride graft copolymers a graft base is prepared by polymerization, wherein by appropriately selecting the monomers used the glass transition temperature T_{g} of said graft base is adjusted, and
b) onto each of the graft bases prepared in a) a copolymer phase is grafted by emulsion polymerization to obtain one each of a vinyl chloride graft copolymer latex, wherein by appropriately selecting the monomers used and the optionally used comonomers the glass transition temperature T_{g} of the respective grafted copolymer phase is adjusted in such a way that the glass transition temperature T_{g} of the respective graft base is lower than the glass transition temperature Tg of the respective grafted copolymer phase, and wherein by appropriately selecting the respective polymerization conditions the average particle size of each of the vinyl chloride graft copolymers is adjusted to less than 300 nm, and
c) isolating the respective vinyl chloride graft copolymers as solids from the respective vinyl chloride graft copolymer latices, and
d) mixing the respective vinyl chloride graft copolymer solids and, optionally, further ingredients to obtain the blend,
wherein the different vinyl chloride graft copolymers are prepared in such a way that they differ from each other by their percentage weight distribution of grafted copolymer phase and graft base.

9. The method according to claim 8, wherein in step b) the copolymer phase is grafted by emulsion polymerization using at least one emulsifier, wherein preferably 60 to 100 wt% of the emulsifier amount, based on the total amount of emulsifier, is pre-charged.

10. The method according to any one of claims 8 to 9, wherein the polymerization temperature during the process of preparing each of the graft bases is between 20 and 90 °C.

11. The method according to any one of claims 8 to 10, wherein the polymerization temperature during the process of preparing each of the grafted copolymer phases is between 45 and 90 °C.

12. An article, manufactured by using a blend according to any one of claims 1 to 7, or by using a blend prepared according to a method according to any one of claims 8 to 11.

13. The article according to claim 12, wherein said article has a transmittance of at least 65 % and/or a haze value of at most 60.

14. Use of a blend according to any one of claims 1 to 7, or of a blend prepared according to a method according to any one of claims 8 to 11, for adjusting the degree of softness of a PVC article.

15. Use of a blend according to any one of claims 1 to 7, or of a blend prepared according to a method according to any one of claims 8 to 11, for manufacturing an article, preferably for manufacturing films by way of extrusion and/or calendering, or for manufacturing molded articles by way of extrusion or injection molding.

## Revendications

1. Mélange contenant au moins deux différents copolymères greffés à base de chlorure de vinyle fabriqués par polymérisation en émulsion, dans lequel les au moins deux différents copolymères greffés contiennent respectivement une base greffée et une phase copolymère greffée constituée au moins en partie de chlorure de vinyle, **caractérisé en ce que** les copolymères greffés se distinguent par leur répartition du poids exprimée en pourcentage en base greffée et en phase copolymère greffée, et dans lequel pour chacun des copolymères greffés, la température de transition vitreuse Tg de la base greffée est inférieure à la température de transition vitreuse Tg de la phase copolymère greffée.

2. Mélange selon l'une quelconque des revendications précédentes,
a) dans lequel au moins un des différents copolymères greffés contient 41 à 70 % en poids de la base greffée et 30 à 59 % en poids de la phase copolymère greffée, respectivement par rapport au copolymère greffé, et/ou
b) dans lequel au moins un des différents copolymères greffés contient 26 à 40 % en poids de la base greffée et 60 à 74 % en poids de la phase copolymère greffée, respectivement par rapport au copolymère greffé, et/ou
c) dans lequel au moins un des différents copolymères greffés contient 5 à 25 % en poids de la base greffée et 75 à 95 % en poids de la phase copolymère greffée, respectivement par rapport au copolymère greffé.

3. Mélange selon l'une quelconque des revendications précédentes, contenant
A) 1 à 99 % en poids, par rapport au mélange, d'un copolymère greffé à base de chlorure de vinyle A contenant 30 à 59 % en poids, par rapport au copolymère greffé à base de chlorure de vinyle A, d'une phase copolymère greffée fabriquée au moins en partie à partir d'un chlorure de vinyle, présentant une température de transition vitreuse Tg située dans la plage allant de plus 20 à 120 °C et 41 à 70 % en poids, par rapport au copolymère greffé à base de chlorure de vinyle A, d'une base greffée présentant une température de transition vitreuse Tg située dans la plage allant de -80 à 20 °C, et/ou
B) 1 à 99 % en poids, par rapport au mélange, d'un copolymère greffé à base de chlorure de vinyle B contenant 60 à 74 % en poids, par rapport au copolymère greffé à base de chlorure de vinyle B, d'une phase copolymère greffée fabriquée au moins en partie à partir d'un chlorure de vinyle, présentant une température de transition vitreuse Tg située dans la plage allant de plus 20 à 120 °C et 26 à 40 % en poids, par rapport au copolymère greffé à base de chlorure de vinyle B, d'une base greffée présentant une température de transition vitreuse Tg située dans la plage allant de -80 à 20 °C, et/ou
C) 1 à 99 % en poids, par rapport au mélange, d'un copolymère greffé à base de chlorure de vinyle C contenant 75 à 95 % en poids, par rapport au copolymère greffé à base de chlorure de vinyle C, d'une phase copolymère greffée fabriquée au moins en partie à partir d'un chlorure de vinyle, présentant une température de transition vitreuse Tg située dans la plage allant de plus 20 à 120 °C et 5 à 25 % en poids, par rapport au copolymère greffé à base de chlorure de vinyle C, d'une base greffée présentant une température de transition vitreuse Tg située dans la plage allant de -80 à 20 °C, et
D) 0 à 75 % en poids, par rapport au mélange, d'autres constituants,
dans lequel au moins deux copolymères greffés évoqués aux points A), B) et C) doivent être contenus et dans lequel le résultat de la somme de A), B) et C) est d'au moins à 25 % en poids et le résultat de la somme de A), B) et D) est de 100 % en poids.

4. Mélange selon l'une quelconque des revendications précédentes, dans lequel la base greffée respective peut être fabriquée par un ou par deux ou par tous les différents copolymères greffés à base de chlorure de vinyle par copolymérisation de composés vinyliques.

5. Mélange selon l'une quelconque des revendications précédentes, dans lequel la phase copolymère greffée respective peut être fabriquée par un ou par deux ou par tous les différents copolymères greffés à base de chlorure de vinyle composés de 60 à 100 % en poids de chlorure de vinyle et composés de 0 à 40 % en poids d'autres composés vinyliques polymérisables.

6. Mélange selon l'une quelconque des revendications précédentes, dans lequel la base greffée respective est réticulée par un ou par deux ou par tous les différents copolymères greffés à base de chlorure de vinyle, et, en option, dans lequel la phase copolymère greffée respective est réticulée par un ou par deux ou par tous les différents copolymères greffés à base de chlorure de vinyle.

7. Mélange selon l'une quelconque des revendications précédentes, pouvant être obtenu par un procédé comprenant les étapes suivantes :
a) pour chaque copolymère greffé à base de chlorure de vinyle, la base greffée est fabriquée par polymérisation, dans lequel la température de transition vitreuse Tg de la base greffée est ajustée par le choix des monomères utilisés,
b) sur chaque base greffée fabriquée au point a), la phase copolymère respective est greffée par polymérisation en émulsion en obtenant le latex de copolymère greffé à base de chlorure de vinyle respectif, dans lequel la température de transition vitreuse Tg de la phase copolymère greffée respective est ajustée par le choix des monomères et, éventuellement, des comonomères utilisés, et dans lequel la taille moyenne des particules de chaque copolymère greffé à base de chlorure de vinyle est ajustée sur une valeur inférieure à 300 nm par le choix des conditions de polymérisation respectives,
c) l'isolation des copolymères greffés à base de chlorure de vinyle respectifs en tant que matières solides des latex respectifs,
d) le mélange des matières solides de copolymère greffé à base de chlorure de vinyle en obtenant le mélange selon l'une quelconque des revendications précédentes.

8. Procédé servant à fabriquer un mélange contenant au moins deux différents copolymères greffés à base de chlorure de vinyle fabriqués par polymérisation en émulsion, dans lequel les au moins deux copolymères greffés différents contiennent respectivement une base greffée et une phase copolymère greffée constituée au moins en partie d'un chlorure de vinyle, comprenant les étapes suivantes :
a) pour chaque copolymère greffé à base de chlorure de vinyle, la base greffée est fabriquée par polymérisation, dans lequel la température de transition vitreuse Tg de la base greffée est ajustée par le choix des monomères utilisés, et
b) sur chacune des bases greffées fabriquées au point a), une phase copolymère est greffée par polymérisation en émulsion en obtenant respectivement un latex de copolymère greffé à base de chlorure de vinyle respectif, dans lequel la température de transition vitreuse Tg de la phase copolymère greffée respective est ajustée par le choix des monomères utilisés et des comonomères éventuellement utilisés, de sorte que la température de transition vitreuse Tg de la phase greffée respective soit inférieure à la température de transition vitreuse Tg de la phase copolymère greffée respectivement et dans lequel la taille moyenne des particules de chaque copolymère greffé à base de chlorure de vinyle est ajustée sur une valeur inférieure à 300 nm par le choix des conditions de polymérisation respectives, et
c) l'isolation des copolymères greffés à base de chlorure de vinyle respectifs en tant que matières solides composées des latex de copolymère greffé à base de chlorure de vinyle respectifs, et
d) le mélange des matières solides de copolymère greffé à base de chlorure de vinyle respectives et, éventuellement d'autres constituants en obtenant le mélange,
dans lequel les différents copolymères greffés à base de chlorure de vinyle sont fabriqués de telle manière qu'ils se distinguent par leur répartition du poids exprimée en pourcentage en phase copolymère greffée et en base greffée.

9. Procédé selon la revendication 8, dans lequel à l'étape b) la phase copolymère est greffée par polymérisation en émulsion en utilisant au moins un émulsifiant, dans lequel de préférence 60 à 100 % en poids de la quantité en émulsifiant est placée au préalable par rapport à la quantité totale en émulsifiant.

10. Procédé selon l'une quelconque des revendications 8 à 9, dans lequel la température de polymérisation se situe, lors de la fabrication de chaque phase greffée, entre 20 et 90 °C.

11. Procédé selon l'une quelconque des revendications 8 à 10, dans lequel la température de polymérisation se situe, lors de la fabrication de chaque phase copolymère greffée, entre 45 et 90 °C.

12. Article, fabriqué en utilisant un mélange selon l'une quelconque des revendications 1 à 7 ou un mélange fabriqué selon un procédé selon l'une quelconque des revendications 8 à 11.

13. Article selon la revendication 12, dans lequel l'article présente une transmission d'au moins 65 % et/ou une valeur de trouble de 60 au maximum.

14. Utilisation d'un mélange selon l'une quelconque des revendications 1 à 7 ou d'un mélange fabriqué selon un procédé selon l'une quelconque des revendications 8 à 11 afin d'ajuster le degré de mollesse d'un article en PVC.

15. Utilisation d'un mélange selon l'une quelconque des revendications 1 à 7 ou d'un mélange fabriqué selon un procédé selon l'une quelconque des revendications 8 à 11 afin de fabriquer un article, de préférence afin de fabriquer des films au moyen d'une extrusion et/ou d'un calandrage ou afin de fabriquer des corps moulés au moyen d'une extrusion ou d'un moulage par injection.
